# EUROPÄISCHE PATENTSCHRIFT

(11) **EP 4 242 605 B1**
(45) Veröffentlichungstag und Bekanntmachung des Hinweises auf die Patenterteilung: **25.06.2025**
(21) Anmeldenummer: 22160529.8
(22) Anmeldetag: 07.03.2022
(51) Int. Cl.: G01G 19/56

(54) **KÜCHENMASCHINESYSTEM UND VERFAHREN ZUM AUTOMATISCHEN TARIEREN FÜR EIN KÜCHENMASCHINESYSTEM**
KITCHEN APPLIANCE SYSTEM AND A METHOD FOR AUTOMATICALLY TARING A KITCHEN APPLIANCE SYSTEM
SYSTÈME DE ROBOT DE CUISINE ET PROCÉDÉ PERMETTANT DE TARER AUTOMATIQUEMENT POUR UN SYSTÈME DE ROBOT DE CUISINE

(43) Veröffentlichungstag der Anmeldung: 13.09.2023
(73) Patentinhaber: Vorwerk & Co. Interholding GmbH, 42275 Wuppertal (DE)
(72) Erfinder: Beckmann, Nils, 42853 Remscheid (DE); Lang, Torsten, 42657 Solingen (DE); Sernecki, Miron, 58097 Hagen (DE); Haunschild, Felix, 45239 Essen (DE); Dr. Schmitz, Kevin, 42781 Haan-Gruiten (DE)
(74) Vertreter: Cohausz & Florack

(56) Entgegenhaltungen:
- WO-A1-2017/182075

## Beschreibung

Die Erfindung betrifft ein Küchenmaschinesystem mit einem ein Gehäuse aufweisenden Grundgerät und mit mindestens einem ein Identifikationsmerkmal aufweisenden Zubehörteil, wobei am Grundgerät ein zum Erfassen eines Bruttogewichts eingerichtetes Wiegemodul vorgesehen ist, und wobei am Grundgerät eine Steuereinrichtung vorgesehen ist. Ebenfalls Gegenstand der Erfindung ist ein Verfahren zum automatischen Tarieren für ein derartiges Küchenmaschinesystem.

Küchenmaschinen der eingangs genannten Art sind bereits bekannt, insbesondere zum Verarbeiten von rohen oder halbfertigen Lebensmittelprodukten. Diese Küchenmaschinen weisen ein Grundgerät auf, mit dem separate Funktionsteile zusammenwirken, um je nach erzieltem Gericht, Getränk oder Ähnliches ein Lebensmittel zu verarbeiten. Funktionsteile werden in der Regel durch Küchenmaschinenanbieter als Zubehörteile verkauft, zum Beispiel als Kochgefäß, Gargefäß, Deckel, Schneide- oder Rühraufsatz. Im Allgemeinen weisen jeweils das Zubehörteil und das Grundgerät jeweils miteinander kompatible Schnittstellen auf, die ein Zusammenwirken beider Bauteile ermöglichen. Insbesondere kann durch miteinander in Zusammenwirkung gebrachten Schnittstellen ein Antrieb eines beweglichen Bauteils des Zubehörteils durch einen in dem Grundgerät angeordneten Elektromotor erfolgen.

Am Grundgerät ist ein Wiegemodul zum Erfassen eines Bruttogewichts vorgesehen. Dabei entspricht vorzugsweise ein Bruttogewicht dem Gesamtgewicht eines befüllten oder ungefüllten Zubehörteils, das am Grundgerät eingesetzt ist. Weiter bevorzugt berücksichtigt das Bruttogewicht auch den Wert, den das Wiegemodul im Leerzustand misst, also wenn am Grundgerät kein Zubehörteil oder weiteres Gut aufgenommen ist.

Das erfasste Bruttogewicht kann auch das jeweilige Eigengewicht von mehreren, gleichzeitig am Grundgerät angesetzten Zubehörteilen, mit oder ohne Inhalt umfassen.

Im Allgemeinen ist ein Wiegemodul, wie die meisten Sensoren, zu kalibrieren, um ein aussagekräftiges Messergebnis zu erzielen. Bei einem Wiegemodul erfolgt die Kalibrierung durch ein sogenanntes Tarieren, das in der Regel durch eine manuelle Nutzerangabe angeleitet bzw. gesteuert wird. So wird bei einem bestimmten Zustand des Wiegemoduls der dann erfasste Wert bzw. das aktuell gemessene Bruttogewicht als "Null" definiert und als Taragewicht gespeichert. Dieses Taragewicht wird für spätere Gewichtserfassungen vom dann aktuellen erfassten Gewicht subtrahiert, um ein Nettogewicht zu berechnen bzw. anzuzeigen.

Mit anderen Worten ist das Bruttogewicht der durch das Wiegemodul erfasste Wert und das Nettogewicht das zu ermittelnde, eigene Gewicht eines gegebenenfalls durch ein Zubehörteil aufgenommenen Guts.

Eine Küchenmaschine mit einer Wägeeinrichtung ist zum Beispiel aus der Druckschrift DE 10 2014 111 193 A1 bekannt. Für das Tarieren kann an dieser Küchenmaschine ein erfasstes Bruttogewicht durch Nutzereingabe, also manuell, auf null gesetzt werden. Alternativ kann ein beim Hochfahren der bekannten Küchenmaschine erfasstes Bruttogewicht automatisch als "null" definiert werden.

Zur Minimierung des Aufwands seitens des Nutzers wird durch die Druckschrift EP 3446081 A1 eine weitere Küchenmaschine vorgeschlagen, wobei ein Zubehörteil erkannt und so auch sein eigenes, dem Identifikationscode zugeordnetes und vorher eingespeichertes Gewicht für die Berechnung eines Nettogewichts automatisch berücksichtigt wird.

Bei der Durchführung einer Zubereitung kommt häufig vor, dass Zutaten nacheinander in dasselbe Zubehörteil eingeführt bzw. ein Zubehörteil mehrfach eingesetzt oder entfernt wird. Nachteilig bei den bekannten Küchenmaschinen ist allerdings, dass ein Tarieren mehrfach durchgeführt wird, insbesondere wenn eine weitere Zutat hinzugefügt wird. Daneben können auch weitere, zusätzliche Zubehörteile eingesetzt werden, die eine Gewichtserfassung verfälschen.

Der vorliegenden Erfindung liegt vor diesem Hintergrund die Aufgabe zu Grunde, bekannte Küchenmaschinesysteme zu verbessern, und insbesondere die Erfolgsaussichten sowie die Nutzerfreundlichkeit bei der Nutzung eines Küchenmaschinesystems zu erhöhen.

Diese Aufgabe wird durch ein Küchenmaschinesystem der eingangs genannten Art dadurch gelöst, dass am Grundgerät eine zum Erfassen eines Identifikationsmerkmals mindestens eines Zubehörteils eingerichtete Erfassungseinrichtung vorgesehen ist, und dass die Steuereinrichtung dazu eingerichtet ist, eine Positionsänderung des mindestens einen Zubehörteils relativ zum Grundgerät zu erkennen, eine einem durch die Erfassungseinrichtung erfassten Identifikationsmerkmal entsprechende Gewichtsinformation abzurufen und ein Nettogewicht auf Basis eines durch das Wiegemodul erfassten Bruttogewichts und unter Berücksichtigung der Gewichtsinformation zu berechnen.

So bietet das Küchenmaschinesystem eine automatische, intelligente Tarafunktion an. Dadurch wird nicht nur die Gelinggarantie eines am Küchenmaschinesystem durchgeführten Zubereitungsvorgangs, sondern auch die Nutzerfreundlichkeit erhöht. Insbesondere kann von einer dedizierten, manuellen Nutzereingabe für die Durchführung eines Tarierens abgesehen werden und trotzdem ein Nettogewicht für eine Zutat zutreffend bestimmt werden.

Durch automatische Identifizierung und Erkennen des Einsetzens oder Entfernen eines Zubehörteils kann ein Nettogewicht für einen gegebenenfalls aufgenommenen Inhalt mit erhöhter Sicherheit automatisch und mit verringertem Nutzeraufwand bestimmt werden.

Außerdem kann mit dem erfindungsgemäßen Küchenmaschinesystem ein Nettogewicht für eine Zutatenmenge zutreffend bestimmt werden, die an einem nicht mit dem Grundgerät eingesetzten Zubehörteil geändert worden ist, zum Beispiel durch Auffüllen oder Leeren in einer nicht am Grundgerät angebrachten Position. Auch das jeweilige Eigengewicht von weiteren, erst im Laufe eines Zubereitungsvorgangs eingesetzten Zubehörteilen kann automatisch bei der Berechnung des Nettogewichts berücksichtigt werden.

Ein Grundgerät im Sinne der vorliegenden Erfindung ist vorzugsweise als Basis für den Einsatz von Zubehörteilen ausgestaltet, indem es eine Schnittstelle für ein Zusammenwirken mit mindestens einem Zubehörteil aufweist. Das Grundgerät weist ein Gehäuse auf, in dem ein Elektromotor zum Antrieb von Zubehörteilen angeordnet ist. Der Elektromotor wirkt mit einem am Grundgerät eingesetzten Zubehörteil über die Schnittstelle des Grundgeräts zusammen.

Als Zubehörteil wird jedes für ein Zusammenwirken mit dem Grundgerät ausgebildetes Teil verstanden. Das Zubehörteil kann mittelbar oder unmittelbar am Grundgerät einsetzbar sein, wobei für ein unmittelbares Einsetzen das Zubehörteil eine mit der Schnittstelle des Grundgeräts kompatible Schnittstelle aufweist, und wobei für ein unmittelbares Einsetzen das Zubehörteil an einem weiteren Zubehörteil angesetzt ist, das wiederum unmittelbar am Grundgerät eingesetzt ist. Der Begriff "Einsetzen" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit. Die Funktion, für die das Zubehörteil vorgesehen ist, bezeichnet vorzugsweise den Zubehörteiltyp.

Der Begriff Identifikationsmerkmal umfasst jede Information über den Typ und / oder eine Eigenschaft des Zubehörteils. Vorzugsweise reicht das Identifikationsmerkmal aus, um ein Zubehörteil zu identifizieren bzw. im Kontext einer Datenbank mit mehreren Identifikationsmerkmalen zuordnen zu können. Ein Identifikationsmerkmal im Sinne der Erfindung kann ein Zubehörteiltyp, wie zum Beispiel Schneide-, Rühr-, Koch-, Wiege-, Gar-, Dampf- oder Abdeckungsaufsatz, und / oder eine Seriennummer sein.

Das Informationsmerkmal ist vorzugsweise auf einem Datenträger gespeichert, der in dem Grundkörper des Zubehörteils integriert oder am Grundkörper des Zubehörteils dauerhaft angebracht ist. Es können mehrere Datenträger vorgesehen sein, die jeweils ein Identifikationsmerkmal tragen, und die an unterschiedlichen Positionen am Zubehörteil angeordnet sind. So kann je nach Einsatzposition bzw. Richtung, in der das Zubehörteil am Grundgerät eingesetzt ist, ein der Einsatzposition entsprechendes Identifikationsmerkmal erfasst werden. Alternativ oder zusätzlich kann ein Datenträger mehrere Identifikationsmerkmale aufweisen, die jeweils in Abhängigkeit von der Einsatzposition des Zubehörteils am Grundkörper erfasst werden. Insbesondere kann ein Datenträger umschaltbar, zum Beispiel mithilfe eines Magnets, sein und in Abhängigkeit von der Schaltposition bzw. von dem Schaltzustand ein entsprechendes Identifikationsmerkmal zur Erfassung bereitstellen. Somit kann für ein Zubehörteil, das mehrere Einsatzpositionen am Grundgerät annehmen kann, ein passender Schnellstartmodus in Abhängigkeit von seiner aktuellen Einsatzposition automatisch aufgerufen werden.

Die Erfassungseinrichtung am Grundgerät ist dazu eingerichtet, das Identifikationsmerkmal des Zubehörteils zu erfassen. Ist zum Beispiel das Identifikationsmerkmal in Form eines QR-Codes gespeichert, so ist die Erfassungseinrichtung vorzugsweise als optischer Leser ausgebildet. Die Erfassungseinrichtung kann auch ein Leser für einen mit einer RFID-Antenne verbundenen Datenspeicher, ein Teil eines Bluetooth-Systems oder ein Teil eines Bussystems sein.

Am Grundgerät ist ein zum Erfassen eines Bruttogewichts eingerichtetes Wiegemodul vorgesehen, wobei das Wiegemodul vorzugsweise ausreichend empfindlich ist, um geringe Gewichtsvariationen zu erfassen. Insbesondere kann das Wiegemodul zum Erfassen einer durch Hinzufügen oder Entfernen eines Zubehörteils ausgebildet sein, das nicht zum Aufnehmen einer Zutat vorgesehen ist. Beispielsweise ist das Wiegemodul ausreichend empfindlich, um eine durch Einsetzen oder Entfernen eines Schneide- oder Rühraufsatzes herbeigeführte Gewichtsvariation zu erfassen.

Weiterhin ist eine Steuereinrichtung in dem Gehäuse oder am Gehäuse des Grundgeräts angeordnet. Die Steuereinrichtung weist vorzugsweise einen Prozessor mit einem Speichermedium auf. Insbesondere kann ein Computerprogramm mit Befehlen auf dem Speichermedium gespeichert sein, deren Ausführung durch den Prozessor die Durchführung eines Betriebsverfahrens durch die Küchenmaschine bewirkt. Auf dem Speichermedium kann eine Datenbank mit Identifikationsmerkmalen, Gewichtsinformationen und / oder Kochinformationen gespeichert sein.

Insbesondere kann die Steuereinrichtung für ein zeitnahes oder gleichzeitiges Empfangen und Verarbeiten von einem durch das Wiegemodul erfassten Bruttogewicht und von einem durch die Erfassungseinrichtung erfassten Identifikationsmerkmal eingerichtet sein. Alternativ oder zusätzlich kann die Steuereinrichtung dazu eingerichtet sein, erst eine Positionsänderung eines Zubehörteils festzustellen, und dann erst der Erfassungseinrichtung zu befehlen, einen Erfassungsvorgang zur Identifizierung des Zubehörteils durchzuführen.

Die Steuereinrichtung ist vorzugsweise dazu eingerichtet, ein erfasstes Identifikationsmerkmal mit Identifikationsmerkmalen aus einer Datenbank zu vergleichen, um das dem erfassten Identifikationsmerkmal aufweisende Zubehörteil zu identifizieren. Dabei ist eine Gestaltung der Datenbank mit hinterlegten Identifikationsmerkmalen, denen für das entsprechende Zubehörteil eine Gewichtsinformation zugeordnet ist, vorteilhaft.

Eine Gewichtsinformation im Sinne der Erfindung ist vorzugsweise ein Wert für das eigene Gewicht eines Zubehörteils. Ist das Zubehörteil zum Beispiel als Gefäß ausgebildet, dann ist die dem Identifikationsmerkmal dieses Zubehörteils zugeordnete Gewichtsinformation ein Wert für das Gewicht des leeren Gefäßes.

In der Datenbank können auch Kochinformationen gespeichert sein, die mindestens einem Identifikationsmerkmal zugeordnet sind, und die die Ausführung eines Zubereitungsschrittes mithilfe des das Identifikationsmerkmal tragenden Zubehörteils betreffen. Der Begriff Kochinformation umfasst jede Art von Zubereitungsanleitung, Information über eine Zutat wie Zutatenart, Zutatenmenge oder Zutatengewicht oder über ein Zubehörteil, das für einen Zubereitungsschritt einzusetzen ist.

Die Steuereinrichtung ist dazu eingerichtet, eine Positionsänderung des mindestens einen Zubehörteils relativ zum Grundgerät zu erkennen. So kann die Steuereinrichtung insbesondere in der Lage sein, ein Einsetzen oder Entfernen eines oder mehrerer Zubehörteile am Grundgerät zu erkennen. Alternativ oder zusätzlich kann die Steuereinrichtung dazu geeignet sein, ein Einsetzen oder ein Entfernen eines Zubehörteils an einem weiteren, zusätzlichen, bereits am Grundgerät eingesetzten Zubehörteils zu erkennen. So kann die Steuereinrichtung zum Beispiel dazu geeignet sein, das Einsetzen eines Schneide- oder Rühraufsatzes oder eines Deckels an einem Kochgefäß zu erkennen.

Weiterhin ist die Steuereinrichtung dazu eingerichtet, eine einem durch die Erfassungseinrichtung erfassten Identifikationsmerkmal entsprechende Gewichtsinformation abzurufen. Vorzugsweise kann die Steuereinrichtung ein erfasstes Identifikationsmerkmal mit in einer Datenbank hinterlegten Identifikationsmerkmalen vergleichen und eine Gewichtsinformation, die einem übereinstimmenden Identifikationsmerkmal aus der Datenbank zugeordnet ist, abrufen.

Die Steuereinrichtung ist auch dazu eingerichtet, ein Nettogewicht auf Basis eines durch das Wiegemodul erfassten Bruttogewichts und unter Berücksichtigung der Gewichtsinformation zu berechnen. Nach dem Erfassen eines Bruttogewichts durch das Wiegemodul, dem Erkennen einer Positionsänderung eines Zubehörteils und dem Abrufen einer dem erkannten Zubehörteil entsprechenden Gewichtsinformation, kann ein Nettogewicht, also das Gewicht eines ggf. durch das Zubehörteil aufgenommenen Inhalts berechnet werden. Dabei kann das Gewicht des Inhaltes null sein, also das Zubehörteil leer sein. Vorzugsweise liegt auch der Wert, den das Wiegemodul für einen Leerzustand misst, also wenn kein Zubehörteil oder Gut am Grundgerät eingesetzt ist, vor. So kann dieser auch beim Berechnen des Nettogewichts berücksichtigt werden.

Für die Berechnung des Nettogewichts wird vorzugsweise der Betrag der Gewichtsinformation vom erfassten Bruttogewicht abgezogen, wenn ein Einsetzen eines Zubehörteils erkannt wurde, oder der Betrag der Gewichtsinformation zum erfassten Bruttogewicht addiert, wenn ein Entfernen eines Zubehörteils erkannt wurde.

Gemäß einer ersten Ausführungsform des Küchenmaschinesystems ist die Steuereinrichtung dazu eingerichtet, ein Einsetzen oder Entfernen mindestens eines Zubehörteils in Bezug auf das Grundgerät und / oder in Bezug auf ein weiteres Zubehörteil durch
- Bilden eines Unterschieds zwischen einem ersten, bei einem ersten Zeitpunkt erfassten Bruttogewicht, und einem zweiten, bei einem zweiten, späteren Zeitpunkt erfassten Bruttogewicht,
- Vergleichen des Betrags des gebildeten Unterschieds mit mindestens einem Referenzwert aus einer Datenbank und
- Einordnen des Vorzeichens des gebildeten Unterschieds als "positiv" oder "negativ"
zu erkennen. Außerdem ist die Steuereinrichtung dazu eingerichtet, in Abhängigkeit eines erkannten Einsetzens oder Entfernens das Nettogewicht durch Addieren der Gewichtinformation mit dem zweiten Bruttogewicht oder Subtrahieren der Gewichtinformation vom zweiten Bruttogewicht zu berechnen.

Mit einem derart ausgebildeten Küchenmaschinesystem kann ein Einsetzen oder Entfernen eines Zubehörteils am Grundgerät auf Basis einer Gewichtsänderung erkannt und auf eine dedizierte Positionserfassungseinrichtung verzichtet werden. Dies ermöglicht eine kompakte Ausgestaltung des Grundgeräts.

Auch hier wird vorzugsweise der Wert, den das Wiegemodul für einen Leerzustand misst, also wenn kein Zubehörteil oder Gut am Grundgerät eingesetzt ist, bei der Berechnung des Nettogewichts mitberücksichtigt.

Vorzugsweise erfolgt eine Erfassung eines Bruttogewichts durch das Wiegemodul bei sukzessiven Zeitpunkten. Alternativ erfolgt eine Erfassung eines Bruttogewichts durch das Wiegemodul kontinuierlich in der Zeit. Je kleiner der Zeitabstand zwischen zwei Erfassungen ist, desto höher ist die Wahrscheinlichkeit, eine Gewichtsänderung festzustellen und auch berücksichtigen zu können. Eine mehrfache, in der Zeit versetzte Erfassung und Speicherung eines Bruttogewichts ermöglicht nicht nur eine Gewichtsüberwachung, sondern auch ein Abrufen von Werten, die in der Vergangenheit erfasst worden sind. So kann zum Beispiel eine Variabel für ein Gewicht auf einen zuvor erfassten Wert für ein Bruttogewicht zurückgesetzt werden.

Unter dem Begriff "Unterschied" wird vorliegend eine vektorielle Größe, also mit einem absoluten Betrag und mit einem Vorzeichen verstanden. Das Vorzeichen kann positiv oder negativ sein.

Anhand des Vergleichs des Betragsunterschieds mit Referenzwerten stellt die Steuereinrichtung fest, ob sich der Einsatzzustand eines oder mehrerer Zubehörteile am Grundgerät geändert hat.

Ergibt der Vergleich mindestens eine Übereinstimmung des gebildeten Betrags mit einem Referenzwert aus der Datenbank, dann erkennt die Steuereinrichtung, dass sich der Einsatzzustand eines dem Referenzwert entsprechenden Zubehörteils geändert hat. Ordnet die Steuereinrichtung in einem weiteren Schritt das Vorzeichen des gebildeten Unterschieds als positiv ein, dann gibt die Steuereinrichtung ein Einsetzen mindestens eines Zubehörteils entsprechendes Signal aus. Ist das Vorzeichen negativ, dann erkennt die Steuereinrichtung ein Entfernen mindestens eines Zubehörteils.

Ergibt der Vergleich, dass der Betrag des gebildeten Unterschieds mit keinem der Referenzwerte aus der Datenbank übereinstimmt, dann erkennt die Steuereinrichtung, dass kein Zubehörteil eingesetzt oder entfernt worden ist. Ist der Betrag dennoch ungleich null, dann erkennt die Steuereinrichtung, dass die Gewichtsänderung durch Hinzufügen oder Entfernen eines in einem Zubehörteil aufgenommenen Inhalts herbeigeführt ist. Durch Zuordnen des Vorzeichens des gebildeten Unterschieds kann die Steuereinrichtung ein Hinzufügen oder Entfernen erkennen.

Ist der Betrag gleich null, erkennt die Steuereinrichtung unabhängig vom Vorzeichen, dass keine Gewichtsänderung vollzogen wurde, und dass ein Zubehörteil weder eingesetzt noch entfernt wurde, und auch dass kein Inhalt hinzugefügt oder entfernt wurde.

Gemäß einer weiteren Ausführungsform des Küchenmaschinesystems ist am Grundgerät eine Positionserfassungseinrichtung vorgesehen und dazu eingerichtet, ein Einsetzen oder Entfernen mindestens eines Zubehörteils in Bezug auf das Grundgerät und / oder in Bezug auf ein weiteres Zubehörteil zu erfassen und an die Steuereinrichtung weiterzuleiten. Weiterhin ist die Steuereinrichtung dazu eingerichtet, in Abhängigkeit eines erkannten Einsetzens oder Entfernens das Nettogewicht durch Addieren der Gewichtinformation mit dem erfassten Bruttogewicht oder Subtrahieren der Gewichtinformation vom erfassten Bruttogewicht zu berechnen.

Somit erkennt die Steuereinrichtung automatisch, ob ein Zubehörteil eingesetzt ist, und ob seine Position ein bestimmungemäßes Zusammenwirken mit dem Grundgerät erlaubt, und bietet dann auch eine gesteigerte Benutzerfreundlichkeit. Außerdem kann durch Vorsehen einer dedizierten Positionserfassungseinrichtung mit erhöhter Genauigkeit und Sicherheit der Einsatzzustand eines Zubehörteils am Grundgerät festgestellt werden. Darüber hinaus kann dadurch der Programmierungsaufwand für die Steuereinrichtung erleichtert sein.

Die Positionserfassungseinrichtung kann im Zubehörteil und/oder im Gehäuse des Grundgeräts angeordnet sein. Vorzugsweise weist das Zubehörteil mindestens ein Element auf, das dazu eingerichtet ist, die Positionserfassungseinrichtung zu beeinflussen, und die Positionserfassungseinrichtung ist dazu eingerichtet, in Abhängigkeit von der Beeinflussung durch das Element ein Signal mit einer Positionsinformation auszugeben.

Insbesondere kann das Zusammenwirken des Elements des Zubehörteils mit der Positionserfassungseinrichtung wie folgt ausgestaltet sein:
- Öffnen oder Schließen eines elektrischen Kontakts zwischen dem Element am Zubehörteil und der Positionserfassungseinrichtung durch Positionsänderung des Zubehörteils relativ zum Grundgerät;
- Öffnen oder Schließen eines magnetischen Kontakts, zum Beispiel ein Reed-Kontakt, zwischen einem als Magnet ausgebildeten Element am Zubehörteil und der Positionserfassungseinrichtung durch Positionsänderung des Zubehörteils relativ zum Grundgerät;
- Erfassen einer durch Zusammenwirken eines Metallteils am Zubehörteil und eines aktiven Erfassungselements der Positionserfassungseinrichtung herbeigeführten Induktivitäts- oder Kapazitätsänderung;
- Erfassen der Intensität des Magnetfeldes eines am Zubehörteil angeordneten Magnets durch ein aktives Erfassungselement der Positionserfassungseinrichtung;
- Erfassen eines Identifikationsmerkmals aus dem als Datenträger ausgebildeten Element am Zubehörteil; und / oder
- Erfassen einer Änderung einer Drehzahl zum Beispiel eines Schneide- oder Rühraufsatzes, einer Temperaturhöhe.

Die Position eines Zubehörteils kann in Bezug auf das Grundgerät erfasst werden. Sind mindestens zwei Zubehörteile vorgesehen, kann die Position eines zweiten Zubehörteils, zum Bespiel eines Rühraufsatzes, in Bezug auf die Position eines ersten Zubehörteils, zum Beispiel eines Rührtopfs, erfasst werden. Insgesamt kann die Positionserfassungseinrichtung dazu geeignet sein, die Position von einem oder von mehreren Zubehörteilen zu erfassen und die Steuereinrichtung dazu eingerichtet sein, das Einsetzen oder Entfernen von einem oder von mehreren Zubehörteilen zusammen automatisch zu erkennen. Beispielsweise kann automatisch erkannt werden, ob ein Garkorb richtig an einem Kochgefäß eingesetzt ist, und auch ob das Kochgefäß wiederum richtig auf dem Grundgerät eingesetzt ist. So können Positionsänderungen von Zubehörteilkombinationen erkannt werden, wobei eine Zubehörteilkombination dadurch gebildet sein kann, dass ein Zubehörteil in, an, auf, unter oder über einem weiteren Zubehörteil angebracht ist.

Gemäß einer weiteren Ausführungsform des Küchenmaschinesystems ist die Steuereinrichtung dazu eingerichtet, beim Erfassen mehrerer Identifikationsmerkmale die jeweils entsprechenden Gewichtsinformationen abzurufen und diese Gewichtsinformationen zusammen für das Berechnen des Nettogewichts zu berücksichtigen.

Im Falle eines Einsatzes mehrerer Zubehörteile gleichzeitig kann das Eigengewicht der jeweiligen Zubehörteile für das Berechnen des Nettogewichts verwendet und somit das Gewicht eines durch eines der Zubehörteile aufgenommenen Guts bestimmt werden. Dies ermöglicht zum Beispiel bei Verwendung eines Kochgefäßes am Grundgerät zusammen mit einem zusätzlichen Rühraufsatz ein zutreffendes Wiegen von in dem Kochgefäß aufgenommenen Lebensmitteln.

Vorzugsweise weist die Erfassungseinrichtung ein Erfassungsfeld auf und ist dazu eingerichtet, maschinenlesbare Informationen, die einem Identifikationsmerkmalsformat entsprechen, jeweils als Identifikationsmerkmale aufzunehmen und an die Steuereinrichtung weiterzuleiten. Weiterhin kann die Steuereinrichtung die so erfassten, mehreren Identifikationsmerkmale jeweils mit Identifikationsmerkmalen aus einer Datenbank vergleichen und aus dem Vergleichsergebnis bestimmen, welche Zubehörteile vorliegend eingesetzt sind.

Bei einer besonderen Ausführungsform ist die Steuereinrichtung dazu geeignet, Kochinformationen aus der Datenbank mit Identifikationsmerkmalen abzurufen, die gleichzeitig für alle erkannten Zubehörteile zutreffend sind. Zutreffend sind Kochinformationen, die die Ausführung eines Zubereitungsschrittes mithilfe eines ein erfasstes Identifikationsmerkmal tragenden Zubehörteils betreffen. So ist zum Beispiel ein Kochrezept für Kartoffelpüree eine zutreffende Kochinformation für eine Zubehörteilkombination "Kochgefäß" mit "Rühraufsatz".

Gemäß einer weiteren Ausführungsform des Küchenmaschinesystems ist die einem erfassten Identifikationsmerkmal entsprechende Gewichtsinformation zusammen mit dem Identifikationsmerkmal am Zubehörteil, in einem Speichermittel der Steuereinrichtung oder in einer externen, durch die Steuereinrichtung zugreifbaren Datenbank gespeichert.

Eine am Zubehörteil gespeicherte Gewichtsinformation, zum Beispiel in einem am Zubehörteil angeordneten Datenträger oder als Kodierung verringert die Verwechslungsgefahr mit weiteren Zubehörteilen, die ein anderes Eigengewicht haben.

Eine Speicherung in der Steuereinrichtung erlaubt wiederum einen vereinfachten Zugang zur Gewichtsinformation und es kann auf ein Erfassen der Gewichtsinformation zusammen mit dem Identifikationsmerkmal verzichtet werden.

Hierzu weist die Steuereinrichtung vorzugsweise ein eigenes Speichermittel auf, auf dem Gewichtsinformationen gespeichert und jeweils mindestens einem Identifikationsmerkmal zugeordnet sind.

Ist die Gewichtsinformation auf einer externen Datenbank hinterlegt, kann diese durch den Zubehörteilhersteller aus der Ferne verwaltet bzw. freigeschaltet, aktualisiert oder umgeändert werden. Dies kann besonders vorteilhaft sein, wenn sich zum Beispiel das Eigengewicht des Zubehörteils durch Verschleiß ändert oder wenn aus Versehen eine falsche Gewichtsinformation hinterlegt wurde. Vorzugsweise ist die Steuereinrichtung für einen Zugriff auf die Datenbank über eine Kommunikationsschnittstelle eingerichtet.

Besondern vorteilhaft ist das Speichern der Gewichtsinformation mit einem besonderen Format oder als verschlüsselte, maschinenlesbare Information. Dadurch kann ein Einsatz von Zubehörteilen von Drittanbietern vermieden werden.

Gemäß einer weiteren Ausführungsform des Küchenmaschinesystems ist der Betrag der einem erfassten Identifikationsmerkmal entsprechenden Gewichtsinformation durch den Zubehörteilhersteller oder im Rahmen eines Kalibrierungsvorgangs durch Wiegen des entsprechenden, ungefüllten Zubehörteils mithilfe des Wiegemoduls hinterlegt worden.

Ein Hinterlegen einer Gewichtsinformation durch den Zubehörteilhersteller kann bei einem Speichern am Zubehörteil, in der Steuereinrichtung oder in einer separaten Datenbank erfolgen. Dadurch kann sichergestellt werden, dass die gespeicherte Gewichtsinformation dem tatsächlichen Eigengewicht des Zubehörteils entspricht und auch Fehlspeicherungen zum Beispiel seitens des Nutzers verringert werden.

Ein Kalibrieren ermöglicht wiederum eine Anpassung der Gewichtsinformationen an das tatsächliche, aktuelle Eigengewicht von Zubehörteilen. Gewichtsvariationen können zum Beispiel durch Verschleiß verursacht worden sein. Auch eine Verschmutzung des Wiegemoduls oder eines Zubehörteils, die das Wiegen fälschen würde, kann so berücksichtig werden.

Insbesondere kann eine Gewichtsinformation beim Fertigungsprozess des Zubehörteils durch eine Kalibrierung des Wiegemoduls und der Steuereinrichtung mithilfe des Nutzers, zum Beispiel durch Betätigen einer Tara-Funktion an einer Kommunikationsschnittstelle und / oder durch eine automatische Kalibrierung durch die Steuereinrichtung hinterlegt worden sein. Eine manuelle oder automatische Kalibrierung kann einem Zubereitungsvorgang zeitlich vorangestellt sein und / oder während der Durchführung eines Zubereitungsvorgangs mit dem Küchenmaschinesystem erfolgen.

Weiterhin kann eine Gewichtsinformation einem Identifikationsmerkmal durch den Küchenmaschinenhersteller vor Verkauf der Küchenmaschine zugeordnet sein und / oder durch ein Softwareupdate nachträglich zugeordnet sein. Eine Zuordnung von Gewichtsinformationen kann auch in Zusammenhang mit dem Kauf eines Zubehörteils erfolgen, indem Gewichtsinformationen in der Datenbank freigeschaltet bzw. zugänglich gemacht werden, wenn ein passendes Zubehörteil erworben worden ist. Alternativ oder zusätzlich können Gewichtsinformationen Identifikationsmerkmalen zugeordnet werden oder freigeschaltet werden, wenn ein Dienstleistungsangebot angenommen worden ist, wie zum Beispiel eine Zusatzleistung auf einem mit der Datenbank verbundenen, digitalen Portal. Daneben kann eine Zuordnung durch Nutzereingabe in der Datenbank hinterlegt werden.

Alternativ kann eine Gewichtsinformation für ein Zubehörteil im Kontext eines Lernverfahrens durch die Steuereinrichtung hinterlegt werden. So kann bei einer ersten Verwendung des Zubehörteils zusammen mit dem Grundgerät das Eigengewicht des Zubehörteils durch Bilden des Unterschieds zwischen einem Bruttogewicht, das ohne das Zubehörteil erfasst worden ist, und einem Bruttogewicht, das mit dem Zubehörteil erfasst worden ist, automatisch ermittelt werden. Insbesondere kann das so ermittelte Eigengewicht des Zubehörteils als Gewichtsinformation automatisch gespeichert werden, die dann mit dem Identifikationsmerkmal des Zubehörteils in einer Datenbank verknüpft ist.

Gemäß einer weiteren Ausführungsform des Küchenmaschinesystems ist die Steuereinrichtung dazu eingerichtet, das Nettogewicht mit einer Gewichtsangabe aus einer Zubereitungsanleitung zu vergleichen und einen entsprechenden Nutzerhinweis auszugeben, eine Zutatenmenge zu ergänzen oder zu verringern, wobei die Gewichtsangabe ein Sollgewicht für eine Zutatenmenge umfasst.

Dadurch kann das Küchenmaschinesystem einen Nutzer in der Lage versetzen, einer Zubereitungsanleitung einfach zu folgen. Insbesondere kann durch ein derartiges Einrichten der Steuereinrichtung in Kombination mit der Zubehörteilerkennung eine zutreffende Nutzeranweisung ausgegeben werden, auch wenn das Zubehörteil während eines Zubereitungsvorgangs am Grundgerät entfernt und wieder eingesetzt worden ist.

In diesem Kontext ist die Gewichtsangabe vorzugsweise ein Sollgewicht für eine Zutatenart, das im Kontext einer Zubereitungsanleitung hinterlegt ist. So kann zum Beispiel "100 g Mehl" eine Gewichtsangabe für eine als Kochrezept für einen Kuchen ausgebildete Zubereitungsanleitung sein.

Alternativ oder zusätzlich ist die Steuereinrichtung dazu eingerichtet, ein erfasstes Bruttogewicht mit einer Gewichtsangabe aus einer Zubereitungsanleitung zu vergleichen und einen entsprechenden Nutzerhinweis auszugeben, eine Zutatenmenge zu ergänzen oder zu verringern, wobei die Gewichtsangabe mindestens eine Gewichtsinformation für ein empfohlenes Zubehörteil und ein Sollgewicht für eine Zutatenmenge umfasst.

So kann ein erkanntes Zubehörteil sowie ein gegebenenfalls durch das Zubehörteil aufgenommener Inhalt in Form eines Lebensmittels oder einer Zutat mit Angaben einer Zubereitungsanleitung während deren Durchführung abgeglichen und ein entsprechender Nutzerhinweis ausgegeben werden.

Hier weist die Gewichtsangabe einerseits eine Gewichtsinformation, die einem Eigengewicht eines Zubehörteils entspricht, und ein Sollgewicht für eine Zutatenart auf. Eine derartige Gewichtsangabe kann durch eine Funktion der Steuereinrichtung erstellt worden sein. Hat zum Beispiel die Steuereinrichtung ein Einsetzen eines Zubehörteils festgestellt und das Zubehörteil erkannt, dann bildet die Steuereinrichtung eine Gewichtsangabe durch Summieren des Betrags der Gewichtsinformation für das erkannte Zubehörteil mit einem hinterlegten Sollwert für eine entsprechend der Zubereitungsanleitung aktuell zu verarbeitende Zutat.

Gemäß einer weiteren Ausführungsform des Küchenmaschinesystems ist die Steuereinrichtung dazu eingerichtet, das Nettogewicht über eine Kommunikationsschnittstelle als maschinenlesbare Information oder als Information für einen Nutzer auszugeben.

Dadurch kann das Nettowicht für eine automatische Steuerung des Küchenmaschinesystems in einem nachgelagerten Zubereitungsschritt verwendet werden, oder als Hinweis für den Nutzer dienen.

Das durch die Steuereinrichtung als maschinenlesbare Information ausgegebene Nettogewicht kann durch die Steuereinrichtung selbst verwendet werden, um Befehle für Funktionsteile des Küchenmaschinesystems für die Durchführung eines nachgelagerten Zubereitungsschritts zu erstellen. Alternativ oder zusätzlich kann das als maschinenlesbare Information ausgegebene Nettogewicht an eine weitere Einheit weitergeleitet werden, zum Beispiel an einen durch Internet zugreifbaren Server.

Die Steuereinrichtung ist in bevorzugter Weise mit der Kommunikationsschnittstelle durch eine bidirektionale Kommunikationsverbindung verbunden, so dass Informationen von der Steuereinrichtung an die Kommunikationsschnittstelle und auch von der Kommunikationsschnittstelle an die Steuereinrichtung ausgetauscht werden können. Weiter bevorzugt ist eine Gestaltung der Steuereinrichtung für einen drahtlosen Zugriff auf eine externe Datenbank, zum Beispiel über WLAN, WIFI, Bluetooth oder Ähnliches. Alternativ oder zusätzlich kann die Steuereinrichtung für einen Zugriff auf eine Datenbank über einen USB-Port oder ein elektronisches BusSystem ausgebildet sein.

Für eine Ausgabe als Information für einen Nutzer ist die Kommunikationsschnittstelle vorzugsweise als Nutzerschnittstelle ausgebildet. Eine Kommunikationsschnittstelle kann vorliegend eine Benutzerschnittelle in Form einer akustischen, haptischen oder optischen Anzeige, aber auch eine Schnittstelle zum Weiterleiten von Informationen an ein Nutzerendgerät wie zum Beispiel ein Smartphone oder ein digitales Hausverwaltungssystem sein. So stellt die Kommunikationsschnittstelle Informationen unmittelbar, das heißt zum Beispiel selbst als Display, oder mittelbar über eine zusätzliche Nutzerschnittstelle zur Verfügung.

Darüber hinaus kann die Steuereinrichtung das Nettogewicht erst mit einer einem Sollgewicht entsprechenden Gewichtsangabe aus einer Zubereitungsanleitung vergleichen und dann das Nettogewicht zusammen mit dem Vergleichsergebnis ausgeben.

Die oben genannte Aufgabe wird auch durch ein Verfahren zum automatischen Tarieren für ein Küchenmaschinesystem mit einem Grundgerät und mit einem Zubehörteil, insbesondere für ein Küchenmaschinesystem nach einem der obigen Ausführungsbeispielen gelöst, bei dem eine Positionsänderung des Zubehörteils relativ zum Grundgerät erkannt wird, bei dem ein Bruttogewicht und ein Identifikationsmerkmal eines Zubehörteils erfasst werden, bei dem eine dem erfassten Identifikationsmerkmal entsprechende Gewichtsinformation abgerufen wird, und bei dem ein Nettogewicht auf Basis des Bruttogewichts und unter Berücksichtigung der Gewichtsinformation berechnet wird.

Gemäß einem ersten Ausführungsbeispiel des Verfahrens wird die Positionsänderung dadurch erkannt, dass ein erstes Bruttogewicht bei einem ersten Zeitpunkt und ein zweites Bruttogewicht bei einem zweiten, späteren Zeitpunkt erfasst werden, dass der Betragsunterschied zwischen dem ersten Bruttogewicht und dem zweiten Bruttogewicht mit mindesten einem Referenzwert aus einer Datenbank verglichen wird, und dass der Vergleich eine Übersteigerung mindestens eines Referenzwerts durch den Betragsunterschied oder eine Übereinstimmung ergibt. Außerdem wird das Nettogewicht auf Basis des zweiten Bruttogewichts und unter Berücksichtigung der Gewichtsinformation berechnet.

So kann im Allgemeinen eine Positionsänderung eines Zubehörteils am Grundgerät erkannt werden. Unter zusätzlicher Berücksichtigung des Vorzeichens des Unterschieds zwischen dem ersten erfassten Bruttogewicht und dem zweiten Bruttogewicht kann auf ein Einsetzen oder ein Entfernen eines Zubehörteils geschlussfolgert werden.

Gemäß einem weiteren Ausführungsbeispiel des Verfahrens wird die Positionsänderung mithilfe einer Positionserkennungseinrichtung erkannt, insbesondere durch Zustandsänderung eines elektrischen Kontakts, eines magnetischen Kontakts, einer Induktivität, einer Kapazität, durch Detektion eines Magnetfeldes, durch Erfassen eines Identifikationsmerkmals aus dem als Datenträger ausgebildeten Element am Zubehörteil und / oder durch Erfassen einer Änderung einer Drehzahl, einer Temperaturhöhe. Darüber hinaus wird das Nettogewicht in Abhängigkeit eines erkannten Einsetzens oder Entfernens durch Addieren der Gewichtinformation mit dem Bruttogewicht oder Subtrahieren der Gewichtinformation vom Bruttogewicht berechnet.

Gemäß einem weiteren Ausführungsbeispiel des Verfahrens wird der Zustand einer Erfassungseinrichtung eingerichtet zum Erfassen eines Identifikationsmerkmals in Abhängigkeit von dem Ergebnis eines Vergleichs des erfassten Bruttogewichts oder des Betragsunterschieds mit mindestens einem Referenzwert aus der Datenbank abgefragt.

So kann anhand des erfassten Bruttogewichts oder gegebenenfalls anhand eines Betragsunterschieds zwischen einem ersten erfassten Bruttogewicht und einem zweiten erfassten Bruttogewicht erst eingeschätzt werden, ob ein oder mehrere Zubehörteile am Grundgerät angebracht sind, bevor ein Erfassungsvorgang mithilfe der Erfassungseinrichtung befohlen wird.

Gemäß einem weiteren Ausführungsbeispiel des Verfahrens wird der Zustand einer Erfassungseinrichtung eingerichtet zum Erfassen eines Identifikationsmerkmals abgefragt, wenn der Vergleich ergibt, dass das erfasste Bruttogewicht oder der Betragsunterschied mit einem Referenzwert aus der Datenbank übereinstimmt, oder dass das erfasste Bruttogewicht oder der Betragsunterschied einen Referenzwert aus der Datenbank übersteigt.

Hiermit kann im Vorfeld einer Identifikationsmerkmalserfassung ein Einsetzen oder Entfernen eines oder mehrerer Zubehörteile eingeschätzt werden.

Ergibt der Vergleich zum Beispiel, dass das Bruttogewicht oder der Betragsunterschied zwischen einem ersten erfassten Bruttogewicht und einem zweiten erfassten Bruttogewicht mit einem Referenzwert aus der Datenbank übereinstimmt, der einer Summe der jeweiligen Eigengewichte mehrerer Zubehörteile entspricht, so kann die Erfassungseinrichtung auf ein Erfassen mehrerer Identifikationsmerkmale eingestellt werden.

Ergibt der Vergleich ein Übersteigen eines Referenzwerts, dann kann davon ausgegangen werden, dass mindestens ein Zubehörteil zusammen mit einem zusätzlichen Inhalt bzw. ein befülltes Zubehörteil eingesetzt ist.

Bei diesem Ausführungsbeispiel können absolute Beträge miteinander verglichen werden, also ohne Berücksichtigung eines Vorzeichens. Alternativ oder zusätzlich können Vorzeichen verglichen werden, um ein Einsetzen oder Entfernen eines Zubehörteils zu erkennen.

Gemäß einem weiteren Ausführungsbeispiel des Verfahrens wird das erfasste Identifikationsmerkmal mit mindestens einem Identifikationsmerkmal aus einer Datenbank verglichen und die abgerufene Gewichtsinformation ist eine einem mit dem erfassten Identifikationsmerkmal übereinstimmenden Identifikationsmerkmal aus der Datenbank zugeordnete Gewichtsinformation.

Alternativ kann der Zustand einer Erfassungseinrichtung eingerichtet zum Erfassen eines Identifikationsmerkmals kontinuierlich abgefragt werden. So kann sowohl anhand eines Vergleichs des erfassten Bruttogewichts bzw. des Unterschieds zwischen einem ersten erfassten Bruttogewicht und einem zweiten erfassten Bruttogewicht mit einem Referenzwert aus der Datenbank, als auch anhand einer Zubehörteilidentifizierung festgestellt werden, ob und welche Zubehörteile eingesetzt sind.

Insbesondere wenn die Referenzwerte jeweils im Kontext einer Zubereitungsanleitung in der Datenbank hinterlegt sind, kann festgestellt werden, ob ein für eine durchzuführende Zubereitungsanleitung zutreffendes Zubehörteil tatsächlich eingesetzt wird.

Gemäß einem weiteren Ausführungsbeispiel des Verfahrens wird das Nettogewicht über eine Kommunikationsschnittelle ausgegeben, wobei das Nettogewicht als maschinenlesbare Information für ein Weiterverwenden durch eine Steuereinrichtung und / oder als Information für einen Nutzer ausgegeben wird.

Das erfindungsgemäße Verfahren und dessen Ausführungsbeispiele haben die gleichen Vorteile wie die erfindungsgemäße Küchenmaschine und ihre Ausführungsformen.

Die oben genannte Aufgabe ist auch mit einem Grundgerät für ein Küchenmaschinesystem, mit einem Gehäuse, mit einem ein zum Erfassen eines Bruttogewichts eingerichtetes Wiegemodul und mit einer Steuereinrichtung dadurch gelöst, dass am Grundgerät eine zum Erfassen eines Identifikationsmerkmals mindestens eines Zubehörteils eingerichtete Erfassungseinrichtung vorgesehen ist, und dass die Steuereinrichtung dazu eingerichtet ist, eine Positionsänderung mindestens eines Zubehörteils relativ zum Grundgerät zu erkennen, eine einem durch die Erfassungseinrichtung erfassten Identifikationsmerkmal entsprechende Gewichtsinformation abzurufen und ein Nettogewicht auf Basis eines durch das Wiegemodul erfassten Bruttogewichts und unter Berücksichtigung der Gewichtsinformation zu berechnen.

Die oben genannte Aufgabe ist auch mit einem Steuerungsmittel für ein Küchenmaschinesystem oder für ein Grundgerät für ein Küchenmaschinesystem gelöst, das dazu eingerichtet ist, ein Verfahren nach einem der obigen Ausführungsbeispiele durchzuführen.

Ferner ist die oben genannte Aufgabe durch ein Computerprogramm aufweisend Befehle gelöst, deren Ausführung auf mindestens einem Prozessor einer Steuereinrichtung eines Küchenmaschinesystems nach einer der oben beschriebenen Ausführungsformen die Durchführung eines Verfahrens gemäß einem oben erläuterten Ausführungsbeispiel bewirkt.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Fig. 1: eine erste Ausführungsform für ein Küchenmaschinesystem,
- Fig. 2: ein Ausführungsbeispiel für ein Verfahren zum automatischen Tarieren für ein Küchenmaschinesystem und
- Fig. 3: eine weitere Ausführungsform für ein Küchenmaschinesystem.

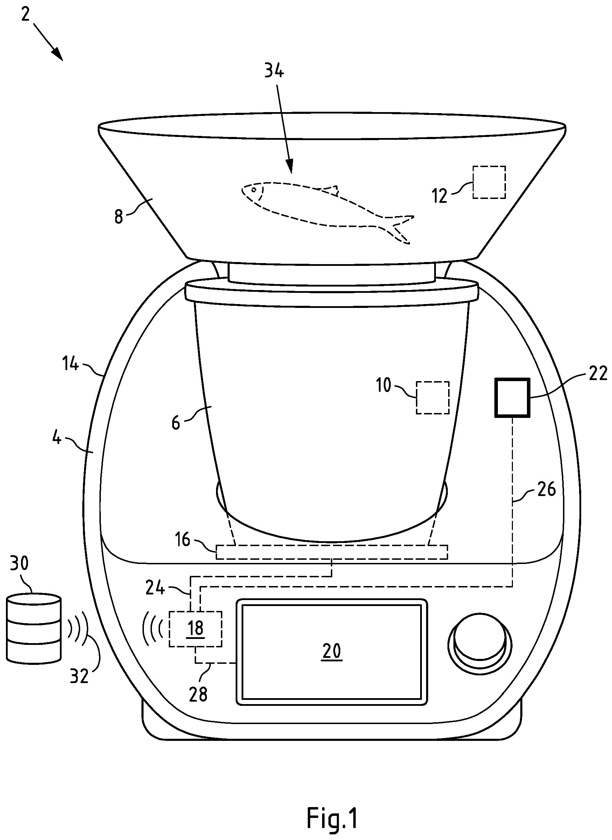

Das Küchenmaschinesystem 2 aus der Fig. 1 weist ein Grundgerät 4, ein erstes, als Kochgefäß ausgebildetes Zubehörteil 6 und ein zweites, als Gargefäß ausgebildetes Zubehörteil 8 auf. Das erste Zubehörteil 6 und das zweite Zubehörteil 8 weisen jeweils einen Datenträger 10, 12 auf, auf dem ein Identifikationsmerkmal als maschinenlesbare Information gespeichert ist.

Das Grundgerät 4 weist ein Gehäuse 14, ein Wiegemodul 16, eine Steuereinrichtung 18, eine Kommunikationsschnittstelle 20 und eine Erfassungseinrichtung 22 auf. Das Wiegemodul 16 und die Erfassungseinrichtung 22 sind jeweils zum Erfassen eines Bruttogewichts und zum Erfassen eines Identifikationsmerkmals eingerichtet. Das Wiegemodul 16, die Erfassungseinrichtung 22 und die Kommunikationsschnittstelle 20 sind jeweils mit der Steuereinrichtung 18 über eine bidirektionale Kommunikationsverbindung 24, 26, 28 verbunden.

Die Kommunikationsschnittstelle 20 ist als berührungsempfindlicher Bildschirm eingerichtet und in der Lage, sowohl Nutzerhinweise anzuzeigen, als auch Nutzereingaben zu erfassen und an die Steuereinrichtung 18 weiterzuleiten.

Die Steuereinrichtung 18 ist für einen Zugriff auf einer externen Datenbank 30 mit Identifikationsmerkmalen und Gewichtsinformationen über ein übergreifendes Kommunikationsnetz 32 verbunden, in dem Fall per Internet und zumindest teilweise WiFi.

Das Küchenmaschinesystem 2 ist in einem Zustand dargestellt, in dem das zweite Zubehörteil 8 einen Inhalt 34 aufnimmt und in dem das zweite Zubehörteil 8 über das erste Zubehörteil 6 mittelbar am Grundgerät 4 eingesetzt ist.

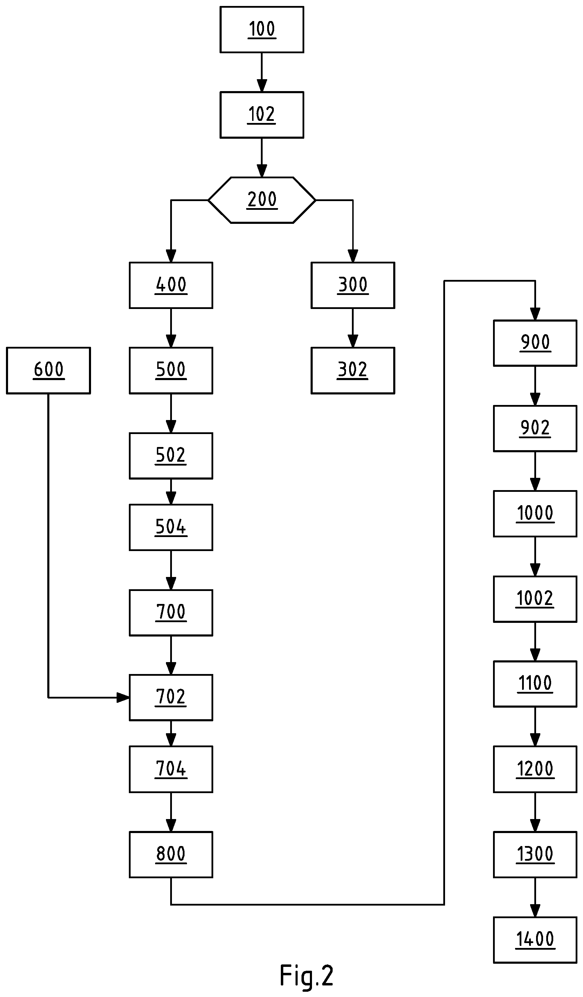

Das Küchenmaschinesystem 2 und insbesondere die Steuereinrichtung 18 sind zum Durchführen der Verfahrensschritte aus der Fig. 2 eingerichtet.

Mit der Fig. 2 wird ein Ausführungsbeispiel für ein Verfahren zum automatischen Tarieren für ein Küchenmaschinesystem 2 mit einem Ablaufdiagramm gezeigt.

Im Schritt 100 wird das Küchenmaschinesystems 2 hochgefahren, im Schritt 102 geprüft, ob die Funktion "automatische Tara" grundsätzlich abgewählt ist, oder ob diese zur Durchführung freigeschaltet ist. Ist die Funktion "automatische Tara" freigeschaltet, dann wird im Schritt 200 durch die Steuereinrichtung 18 über die Kommunikationsschnittstelle 20 eine Nutzeranfrage gestellt, ob eine Funktion "automatische Tara" durchgeführt werden soll.

Wird anschließend durch die Kommunikationsschnittstelle 20 eine Nutzereingabe erfasst, die einer negativen Antwort entspricht (Schritt 300), dann unterbindet die Steuereinrichtung 18 in einem Schritt 302 das Ausführen eines Verfahrens, bei dem ein Nettogewicht auf Basis eines erfassten Bruttogewichts und eines Identifikationsmerkmals automatisch berechnet wird.

Wird wiederum eine Nutzereingabe erfasst, die einer positiven Antwort entspricht (Schritt 400), dann wird mit dem Schritt 500 ein Erfassungsvorgang mithilfe des Wiegemoduls 16 gestartet und mehrere Bruttogewichte nacheinander erfasst (Schritte 502 und 504).

Parallel zum Start des Erfassungsvorgangs bzw. im Schritt 600 wird über die Kommunikationsschnittstelle 20 eine weitere Nutzereingabe erfasst, diesmal betreffend eine Auswahl einer durchzuführenden Zubereitungsanleitung aus der Datenbank 30.

Die zeitliche Entwicklung des Bruttogewichts wird dadurch verfolgt, dass die Steuereinrichtung 18 regelmäßig einen Unterschied zwischen einem ersten, bei einem ersten Zeitpunkt t₁ erfassten Bruttogewicht B(t₁), und einem zweiten, bei einem zweiten, späteren Zeitpunkt t₂ erfassten Bruttogewicht B(t₂)bildet, den absoluten Betrag |B(t₂) - B(t₁)| des gebildeten Unterschieds B(t₂) - B(t₁) mit in der Datenbank 30 hinterlegten Referenzwerten vergleicht und das Vorzeichen des Unterschieds B(t₂) - B(t₁) als "positiv" oder "negativ" einordnet. In der Fig. 2 sind die Erfassung beim Zeitpunkt t₁ und die Erfassung beim Zeitpunkt t₂ jeweils mit dem Schritt 502 und mit dem Schritt 504 schematisch dargestellt. Das Bilden des Unterschieds ist durch den Schritt 700, das Vergleichen des absoluten Betrags |B(t₂) - B(t₁)| mit Referenzwerten durch den Schritt 702 und das Einordnen des Vorzeichens des Unterschieds B(t₂) - B(t₁) durch den Schritt 704 gezeigt.

Vorliegend war zum Zeitpunkt t₁ weder ein Zubehörteil noch ein Inhalt am Grundgerät 4 eingesetzt bzw. aufgenommen. Zum Zeitpunkt t₂ befindet sich das Küchenmaschinesystem 2 in dem in der Fig. 1 gezeigten Zustand, bei dem das zweite Zubehörteil 8 den Inhalt 34 aufnimmt und zusammen mit dem ersten Zubehörteil 6 am Grundgerät 4 eingesetzt ist.

So erfasst das Wiegemodul 16 zum Zeitpunkt t₁ ein erstes Bruttogewicht B(t₁) (Schritt 502), der dem Leerzustand des Grundgeräts 4 entspricht. Das beim Zeitpunkt t₂ erfasste Bruttogewicht (Schritt 504) entspricht der Summe des Werts für den Leerzustand des Grundgeräts 4, des Eigengewichts des ersten Zubehörteils 6, des Eigengewichts des zweiten Zubehörteils 8 und des Eigengewichts des durch das zweite Zubehörteil 8 aufgenommenen Inhalts 34.

Der durch die Steuereinrichtung 18 gebildete Unterschied B(t₂) - B(t₁) (Schritt 700) hat ein positives Vorzeichen und einen absoluten Betrag |B(t₂) - B(t₁)|, der der Summe des Eigengewichts des ersten Zubehörteils 6, des Eigengewichts des zweiten Zubehörteils 8 und des Eigengewichts des durch das zweite Zubehörteil 8 aufgenommenen Inhalts 34 entspricht.

Im Schritt 702 vergleicht die Steuereinrichtung 18 den absoluten Betrag |B(t₂) - B(t₁)| mit Referenzwerten, die im Kontext der eingangs ausgewählten Zubereitungsanleitung (Schritt 600) durch den Hersteller in der Datenbank 30 hinterlegt worden sind. Der Vergleich ergibt ein Überschreiten eines Referenzwerts, der einer Summe der jeweiligen Eigengewichte eines Kochgefäßes und eines Gargefäßes entspricht.

Daneben bzw. im Schritt 704 ordnet die Steuereinrichtung 18 das Vorzeichen des gebildeten Unterschieds B(t₂) - B(t₁) als "positiv" ein.

Auf Basis des Vergleichsergebnisses und des Einordens des Vorzeichens erkennt die Steuereinrichtung 18 (Schritt 800), dass vermutlich ein Kochgefäß und ein Gargefäß zusammen mit einem aufgenommenen Inhalt am Grundgerät 4 eingesetzt sind. Ein Überschreiten des Referenzwerts kann aber auch ein erhöhtes Befüllen eines einzigen Zubehörteils oder ein Einsetzen eines anderweitigen, nicht durch die Zubereitungsanleitung vorgesehenen Zubehörteils bedeuten.

Um zu bestätigen, dass die vermuteten Zubehörteile 6, 8 eingesetzt sind, veranlasst die Steuereinrichtung 18 im Schritt 900 einen Erfassungsvorgang durch die Erfassungseinrichtung 22. Diese erfasst die jeweiligen Identifikationsmerkmale des ersten Zubehörteils 6 und des zweiten Zubehörteils 8 und leitet diese an die Steuereinrichtung 18 weiter (Schritt 902). Daraufhin (Schritt 1000) vergleicht die Steuereinrichtung 18 die jeweiligen erfassten Identifikationsmerkmale mit Identifikationsmerkmalen aus der Datenbank 30. Aus einer Übereinstimmung der erfassten Identifikationsmerkmale mit Identifikationsmerkmalen aus der Datenbank 30 erkennt die Steuereinrichtung 18 im Schritt 1002, dass ein Gargefäß und ein Kochgefäß am Grundgerät 4 eingesetzt sind.

Weiterhin ruft die Steuereinrichtung 18 im Schritt 1100 die Gewichtsinformationen E(Kochgefäß) und E(Gargefäß) ab, die den mit den erfassten Identifikationsmerkmalen jeweils übereinstimmenden Identifikationsmerkmalen des ersten Zubehörteils 6 und des zweiten Zubehörteils 8 in der Datenbank 30 zugeordnet sind.

Im anschließenden Schritt 1200 berechnet die Steuereinrichtung 18 ein Nettogewicht durch Abziehen der Beträge der abgerufenen Gewichtsinformationen E(Kochgefäß) und E(Gargefäß) von dem gebildeten Unterschied B(t₂) - B(t₁). Das berechnete Nettogewicht entspricht dem Eigengewicht des durch das zweite Zubehörteil 8 aufgenommenen Inhalts.

Die Steuereinrichtung 18 gibt im Schritt 1300 das berechnete Nettogewicht über die Kommunikationsschnittstelle 20 als Nutzerhinweis aus und speichert im Schritt 1400 das berechnete Nettogewicht zusammen mit einer zutreffenden Zutatenart für eine Weiterverarbeitung in einem weiteren Zubereitungsschritt der ausgewählten Zubereitungsanleitung.

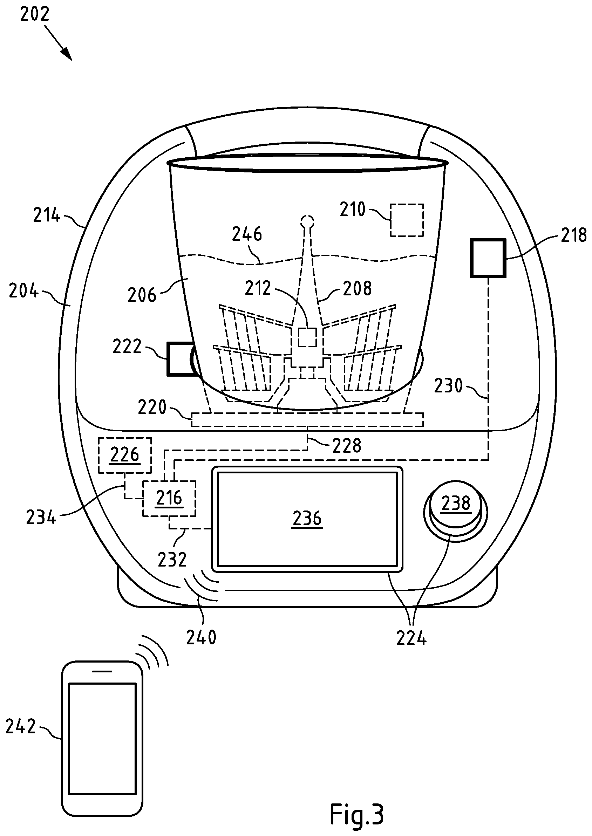

Fig. 3 zeigt eine weitere Ausführungsform für ein Küchenmaschinesystem 202. Hier weist das Küchenmaschinesystem 202 ein Grundgerät 204, ein erstes, als Gefäß ausgebildetes Zubehörteil 206 und ein zweites, als Rühraufsatz ausgebildetes Zubehörteil 208 auf. Jedes Zubehörteil 206, 208 ist mit einem Datenträger 210, 212 ausgestattet, auf dem ein maschinenlesbares Identifikationsmerkmal gespeichert ist.

Das Grundgerät 204 weist ein Gehäuse 214, eine Steuereinrichtung 216, eine Erfassungseinrichtung 218, ein Wiegemodul 220, eine Positionserfassungseinrichtung 222, eine Kommunikationsschnittstelle 224 und ein Speichermittel 226 für eine Datenbank auf. Das Wiegemodul 220, die Erfassungseinrichtung 218, die Kommunikationsschnittstelle 224 und das Speichermittel 226 sind jeweils über eine bidirektionale Kommunikationsverbindung 228, 230, 232, 234 mit der Steuereinrichtung 216 verbunden.

Das Wiegemodul 220 und die Erfassungseinrichtung 218 sind wie bei der Ausführungsform aus der Fig. 1 jeweils zum Erfassen eines Bruttogewichts und zum Erfassen eines Identifikationsmerkmals mindestens eines Zubehörteils eingerichtet. Die Kommunikationsschnittstelle 224 ist als Bildschirm 236 und haptisches Element 238 ausgebildet und über eine kabellose Kommunikationsverbindung 240 mit einer mobilen Nutzerschnittstelle 242 wie ein Smartphone verbindbar.

Das Küchenmaschinesystem 202 und insbesondere die Steuereinrichtung 216 sind für ein Ausführen des folgenden Verfahrens eingerichtet.

Nach Hochfahren des Küchenmaschinesystems 202 erfasst das Wiegemodul 220 ein Bruttogewicht im Leerzustand, bei dem kein Zubehörteil am Grundgerät 204 eingesetzt ist, und die Steuereinrichtung 216 speichert dieses Bruttogewicht als "null". Bruttogewichte, die später im Leerzustand erfasst werden, haben für die Steuereinrichtung 216 einen Betrag gleich null.

Im Folgenden wird der Fall beschrieben, bei dem das erste, mit Kartoffeln 246 befüllte und mit dem zweiten Zubehörteil 208 zusammenmontierte Zubehörteil 206 erst nach Befüllen und Montieren am Grundgerät 204 eingesetzt wird.

Im Laufe des kontinuierlich ablaufenden Erfassens durch die Positionserfassungseinrichtung 222 wird ein Einsetzen mindestens eines Zubehörteils am Grundgerät 204 erkannt. Als Reaktion hierauf veranlasst die Steuereinrichtung 216 einen Erfassungsvorgang durch die Erfassungseinrichtung 218, die die jeweiligen an dem ersten Zubehörteil 206 und an dem zweiten Zubehörteil 208 angeordneten Datenträger 210, 212 liest. Dabei erfasst die Erfassungseinrichtung 218 jeweils ein Identifikationsmerkmal und eine Gewichtsinformation. Auf Basis der erfassten Informationen erkennt die Steuereinrichtung 216, dass das erste Zubehörteil 206 und das zweite Zubehörteil 208 am Grundgerät 204 eingesetzt sind und den jeweiligen Zubehörteiltyp.

Daraufhin vergleicht die Steuereinrichtung 216 die Summe der erfassten Gewichtsinformationen mit einem aktuell durch das Wiegemodul 220 erfasste Bruttogewicht. Ergibt der Vergleich, dass das Bruttogewicht die Summe der erfassten Gewichtsinformationen übersteigt, dann bildet die Steuereinrichtung 216 ein Nettogewicht durch Abziehen der Summe der erfassten Gewichtsinformationen vom erfassten Bruttogewicht.

Die Steuereinrichtung 216 vergleicht gegebenenfalls das berechnete Nettogewicht mit einem Sollgewicht für eine Zutatenmenge aus einer Zubereitungsanleitung aus der Datenbank. In diesem Beispiel ist die Zubereitungsanleitung ein Kochrezept für Kartoffelpüree mit einem Sollwert "1 kg" für die Zutatenart "Kartoffeln". Ergibt der Vergleich, dass das berechnete Nettogewicht das Sollgewicht unterschreitet, dann gibt die Steuereinrichtung 216 über die Kommunikationsschnittstelle 224 einen Nutzerhinweis aus, Kartoffel in einer dem Unterschied zwischen dem berechneten Nettogewicht und dem Sollwert entsprechenden Menge nachzufüllen, also zum Beispiel "bitte 100g Kartoffel nachfüllen".

Sollte das Küchenmaschinesystem 202 dasselbe Verfahren durchführen, obwohl keine Kartoffeln eingefüllt worden sind, dann erfasst die Kommunikationsschnittstelle 224 gegebenenfalls eine Nutzereingabe, die einer Bestätigung eines Leerzustands der Zubehörteile 206, 208 entspricht, also dass keines der am Grundgerät 204 eingesetzten Zubehörteile 206, 208 ein Gut oder Kartoffeln aufnimmt. Demzufolge speichert die Steuereinrichtung 216 das aktuell erfasste Bruttogewicht als Taragewicht für einen gegebenenfalls nachgelagerten Zubereitungsvorgang ein.

## Patentansprüche

1. Küchenmaschinesystem (2, 202)
- mit einem ein Gehäuse (14, 214) aufweisenden Grundgerät (4, 204) und
- mit mindestens einem ein Identifikationsmerkmal aufweisenden Zubehörteil (6, 8, 206, 208),
- wobei am Grundgerät (4, 204) ein zum Erfassen eines Bruttogewichts eingerichtetes Wiegemodul (16, 220) vorgesehen ist, und
- wobei am Grundgerät (4, 204) eine Steuereinrichtung (18, 216) vorgesehen ist,
**dadurch gekennzeichnet,**
- **dass** am Grundgerät (4, 204) eine zum Erfassen eines Identifikationsmerkmals mindestens eines Zubehörteils (6, 8, 206, 208) eingerichtete Erfassungseinrichtung (22, 218) vorgesehen ist, und
- **dass** die Steuereinrichtung (18, 216) dazu eingerichtet ist,
- eine Positionsänderung des mindestens einen Zubehörteils (6, 8, 206, 208) relativ zum Grundgerät (4, 204) zu erkennen,
- eine einem durch die Erfassungseinrichtung (22, 218) erfassten Identifikationsmerkmal entsprechende Gewichtsinformation abzurufen und
- ein Nettogewicht auf Basis eines durch das Wiegemodul (16, 220) erfassten Bruttogewichts und unter Berücksichtigung der Gewichtsinformation zu berechnen.

2. Küchenmaschinesystem (2, 202) nach Anspruch 1,
**dadurch gekennzeichnet,**
- **dass** die Steuereinrichtung (18, 216) dazu eingerichtet ist, ein Einsetzen oder Entfernen mindestens eines Zubehörteils (6, 8, 206, 208) in Bezug auf das Grundgerät (4, 204) und / oder in Bezug auf ein weiteres Zubehörteil (6, 8, 206, 208) durch
- Bilden eines Unterschieds zwischen einem ersten, bei einem ersten Zeitpunkt erfassten Bruttogewicht, und einem zweiten, bei einem zweiten, späteren Zeitpunkt erfassten Bruttogewicht,
- Vergleichen des Betrags des gebildeten Unterschieds mit mindestens einem Referenzwert aus einer Datenbank (30, 226) und
- Einordnen des Vorzeichens des gebildeten Unterschieds als "positiv" oder "negativ"
zu erkennen, und
- **dass** die Steuereinrichtung (18, 216) dazu eingerichtet ist, in Abhängigkeit eines erkannten Einsetzens oder Entfernens das Nettogewicht durch Addieren der Gewichtinformation mit dem zweiten Bruttogewicht oder Subtrahieren der Gewichtinformation vom zweiten Bruttogewicht zu berechnen.

3. Küchenmaschinesystem (2, 202) nach Anspruch 1,
**dadurch gekennzeichnet,**
- **dass** am Grundgerät (4, 204) eine Positionserfassungseinrichtung vorgesehen und dazu eingerichtet ist, ein Einsetzen oder Entfernen mindestens eines Zubehörteils (6, 8, 206, 208) in Bezug auf das Grundgerät (4, 204) und / oder in Bezug auf ein weiteres Zubehörteil (6, 8, 206, 208) zu erfassen und an die Steuereinrichtung (18, 216) weiterzuleiten, und
- **dass** die Steuereinrichtung (18, 216) dazu eingerichtet ist, in Abhängigkeit eines erkannten Einsetzens oder Entfernens das Nettogewicht durch Addieren der Gewichtinformation mit dem erfassten Bruttogewicht oder Subtrahieren der Gewichtinformation vom erfassten Bruttogewicht zu berechnen.

4. Küchenmaschinesystem (2, 202) nach einem der Ansprüche 1 bis 3,
**dadurch gekennzeichnet,**
**dass** die Steuereinrichtung (18, 216) dazu eingerichtet ist, beim Erfassen mehrerer Identifikationsmerkmale die jeweils entsprechenden Gewichtsinformationen abzurufen und diese Gewichtsinformationen zusammen für das Berechnen des Nettogewichts zu berücksichtigen.

5. Küchenmaschinesystem (2, 202) nach einem der Ansprüche 1 bis 4,
**dadurch gekennzeichnet,**
**dass** die einem erfassten Identifikationsmerkmal entsprechende Gewichtsinformation
- zusammen mit dem Identifikationsmerkmal am Zubehörteil (6, 8, 206, 208),
- in einem Speichermittel (226) der Steuereinrichtung (18, 216)
oder
- in einer externen, durch die Steuereinrichtung (18, 216) zugreifbaren Datenbank (30)
gespeichert ist.

6. Küchenmaschinesystem (2, 202) nach einem der Ansprüche 1 bis 5,
**dadurch gekennzeichnet,**
**dass** der Betrag der einem erfassten Identifikationsmerkmal entsprechenden Gewichtsinformation
- durch den Zubehörteilhersteller
oder
- im Rahmen eines Kalibrierungsvorgangs durch Wiegen des entsprechenden, ungefüllten Zubehörteils (6, 8, 206, 208) mithilfe des Wiegemoduls (16, 220)
hinterlegt worden ist.

7. Küchenmaschinesystem (2, 202) nach einem der Ansprüche 1 bis 6,
**dadurch gekennzeichnet**
- **dass** die Steuereinrichtung (18, 216) dazu eingerichtet ist, das Nettogewicht mit einer Gewichtsangabe aus einer Zubereitungsanleitung zu vergleichen und einen entsprechenden Nutzerhinweis auszugeben, eine Zutatenmenge zu ergänzen oder zu verringern, wobei die Gewichtsangabe ein Sollgewicht für eine Zutatenmenge umfasst,
und / oder
- **dass** die Steuereinrichtung (18, 216) dazu eingerichtet ist, ein erfasstes Bruttogewicht mit einer Gewichtsangabe aus einer Zubereitungsanleitung zu vergleichen und einen entsprechenden Nutzerhinweis auszugeben, eine Zutatenmenge zu ergänzen oder zu verringern, wobei die Gewichtsangabe mindestens eine Gewichtsinformation für ein empfohlenes Zubehörteil (6, 8, 206, 208) und ein Sollgewicht für eine Zutatenmenge umfasst.

8. Küchenmaschinesystem (2, 202) nach einem der Ansprüche 1 bis 7,
**dadurch gekennzeichnet**
**dass** die Steuereinrichtung (18, 216) dazu eingerichtet ist, das Nettogewicht über eine Kommunikationsschnittstelle (20, 224) als maschinenlesbare Information oder als Information für einen Nutzer auszugeben.

9. Verfahren zum automatischen Tarieren für ein Küchenmaschinesystem (2, 202) mit einem Grundgerät (4, 204) und mit einem Zubehörteil (6, 8, 206, 208), insbesondere für ein Küchenmaschinesystem (2, 202) nach einem der Ansprüche 1 bis 8,
- bei dem eine Positionsänderung des Zubehörteils (6, 8, 206, 208) relativ zum Grundgerät (4, 204) erkannt wird,
- bei dem ein Bruttogewicht und ein Identifikationsmerkmal eines Zubehörteils (6, 8, 206, 208) erfasst werden,
- bei dem eine dem erfassten Identifikationsmerkmal entsprechende Gewichtsinformation abgerufen wird, und
- bei dem ein Nettogewicht auf Basis des Bruttogewichts und unter Berücksichtigung der Gewichtsinformation berechnet wird.

10. Verfahren nach Anspruch 9,
- bei dem die Positionsänderung dadurch erkannt wird,
- dass ein erstes Bruttogewicht bei einem ersten Zeitpunkt und ein zweites Bruttogewicht bei einem zweiten, späteren Zeitpunkt erfasst werden,
- dass der Betragsunterschied zwischen dem ersten Bruttogewicht und dem zweiten Bruttogewicht mit mindesten einem Referenzwert aus einer Datenbank (30, 226) verglichen wird, und
- dass der Vergleich eine Übersteigerung mindestens eines Referenzwerts durch den Betragsunterschied oder eine Übereinstimmung ergibt, und
- bei dem das Nettogewicht auf Basis des zweiten Bruttogewichts und unter Berücksichtigung der Gewichtsinformation berechnet wird.

11. Verfahren nach Anspruch 9,
- bei dem die Positionsänderung mithilfe einer Positionserkennungseinrichtung erkannt wird, insbesondere durch Zustandsänderung eines elektrischen Kontakts, eines magnetischen Kontakts, einer Induktivität, einer Kapazität, durch Detektion eines Magnetfeldes, durch Erfassen eines Identifikationsmerkmals aus dem als Datenträger ausgebildeten Element am Zubehörteil und / oder durch Erfassen einer Änderung einer Drehzahl, einer Temperaturhöhe, und
- bei dem das Nettogewicht in Abhängigkeit eines erkannten Einsetzens oder Entfernens durch Addieren der Gewichtinformation mit dem Bruttogewicht oder Subtrahieren der Gewichtinformation vom Bruttogewicht berechnet wird.

12. Verfahren nach einem der Ansprüche 9 bis 11,
bei dem der Zustand einer Erfassungseinrichtung (22, 218) eingerichtet zum Erfassen eines Identifikationsmerkmals in Abhängigkeit von dem Ergebnis eines Vergleichs des erfassten Bruttogewichts oder des Betragsunterschieds mit mindestens einem Referenzwert aus der Datenbank (30, 226) abgefragt wird.

13. Verfahren nach Anspruch 12,
bei dem der Zustand einer Erfassungseinrichtung (22, 218) eingerichtet zum Erfassen eines Identifikationsmerkmals abgefragt wird, wenn der Vergleich ergibt,
- dass das erfasste Bruttogewicht oder der Betragsunterschied mit einem Referenzwert aus der Datenbank (30, 226) übereinstimmt,
oder
- dass das erfasste Bruttogewicht oder der Betragsunterschied einen Referenzwert aus der Datenbank (30, 226) übersteigt.

14. Verfahren nach einem der Ansprüche 9 bis 13,
- bei dem das erfasste Identifikationsmerkmal mit mindestens einem Identifikationsmerkmal aus einer Datenbank (30, 226) verglichen wird, und
- bei dem die abgerufene Gewichtsinformation eine einem mit dem erfassten Identifikationsmerkmal übereinstimmenden Identifikationsmerkmal aus der Datenbank (30, 226) zugeordnete Gewichtsinformation ist.

15. Computerprogramm mit Befehlen, deren Ausführung auf mindestens einem Prozessor einer Steuereinrichtung eines Küchenmaschinesystems nach einem der Ansprüche 1 bis 8 die Durchführung eines Verfahrens nach einem der Ansprüche 9 bis 14 bewirkt.

## Claims

1. Kitchen appliance system (2, 202)
- with a base unit (4, 204) having a housing (14, 214) and
- with at least one accessory (6, 8, 206, 208) having an identification feature,
- wherein a weighing module (16, 220) configured to detect a gross weight is provided at the base unit (4, 204), and
- wherein a control device (18, 216) is provided at the base unit (4, 204),
**characterized**
- **in that** a detection device (22, 218), which is configured to detect an identification feature of at least one accessory (6, 8, 206, 208), is provided at the base unit (4, 204), and
- wherein the control device (18, 216) is configured to
- detect a change in position of the at least one accessory (6, 8, 206, 208) relative to the base unit (4, 204),
- retrieve weight information corresponding to an identification feature detected by the detection device (22, 218); and
- calculate a net weight based on a gross weight detected by the weighing module (16, 220) and taking into account the weight information.

2. Kitchen appliance system (2, 202) according to claim 1,
**characterized**
- **in that** the control device (18, 216) is configured to determine an assembly or removal of at least one accessory (6, 8, 206, 208) with respect to the base unit (4, 204) and/or with respect to a further accessory (6, 8, 206, 208) by
- forming a difference between a first gross weight detected at a first time and a second gross weight detected at a second, later time,
- comparing the amount of the difference formed with at least one reference value from a database (30, 226), and
- classifying the sign of the difference formed as "positive" or "negative", and
and
- **in that** the control device (18, 216) is configured to calculate, in dependence on a detected assembly or removal, the net weight by adding the weight information to the second gross weight or subtracting the weight information from the second gross weight.

3. Kitchen appliance system (2, 202) according to claim 1,
**characterized**
- **in that** a position detection device is provided at the base unit (4, 204) and is configured to detect an assembly or removal of at least one accessory (6, 8, 206, 208) with respect to the base unit (4, 204) and/or with respect to a further accessory (6, 8, 206, 208) and to forward this to the control device (18, 216), and
- **in that** the control device (18, 216) is configured to calculate the net weight by adding the weight information to the detected gross weight or subtracting the weight information from the detected gross weight in dependence on a detected assembly or removal.

4. Kitchen appliance system (2, 202) according to any one of claims 1 to 3,
**characterized**
**in that** the control device (18, 216) is configured to retrieve the respective corresponding weight information when a plurality of identification features is detected and to take this weight information together into account for calculating the net weight.

5. Kitchen appliance system (2, 202) according to any one of claims 1 to 4,
**characterized**
- **in that** the weight information corresponding to a detected identification feature is saved
- together with the identification feature on the accessory (6, 8, 206, 208),
- in a memory (226) of the control device (18, 216)
or
- in an external database (30) accessible by the control device (18, 216).

6. Kitchen appliance system (2, 202) according to any one of claims 1 to 5,
**characterized**
- **in that** the amount of weight information corresponding to a detected identification feature has been set up
- by the accessory manufacturer
or
- as part of a calibration process by weighing the corresponding unfilled accessory (6, 8, 206, 208) using the weighing module (16, 220).

7. Kitchen appliance system (2, 202) according to any one of claims 1 to 6,
**characterized**
- **in that** the control device (18, 216) is configured to compare the net weight with a weight indication from a preparation instruction and to output a corresponding user instruction to add or reduce an ingredient quantity, the weight indication comprising a target weight for an ingredient quantity,
and/or
- **in that** the control device (18, 216) is configured to compare a detected gross weight with a weight indication from a preparation instruction and to output a corresponding user indication to add or reduce an ingredient quantity, the weight indication comprising at least weight information for a recommended accessory (6, 8, 206, 208) and a target weight for an ingredient quantity.

8. Kitchen appliance system (2, 202) according to any one of claims 1 to 7,
**characterized**
**in that** the control device (18, 216) is configured to output the net weight via a communication interface (20, 224) as machine-readable information or as information for a user.

9. Method of automatic taring for a kitchen appliance system (2, 202) having a base unit (4, 204) and having an accessory (6, 8, 206, 208), in particular for a kitchen appliance system (2, 202) according to any one of claims 1 to 8,
- wherein a change in position of the accessory (6, 8, 206, 208) relative to the base unit (4, 204) is detected,
- wherein a gross weight and an identification feature of an accessory (6, 8, 206, 208) are detected,
- wherein weight information corresponding to the detected identification feature is retrieved, and
- wherein a net weight is calculated based on the gross weight and taking into account the weight information.

10. Method according to claim 9,
- wherein the change in position is detected thereby
- that a first gross weight is detected at a first time point and a second gross weight is detected at a second, later time point,
- that the difference in amount between the first gross weight and the second gross weight is compared with at least one reference value from a database (30, 226), and
- that the comparison results in an excess of at least one reference value by the difference in amount or a match, and
- wherein the net weight is calculated based on the second gross weight and taking into account the weight information

11. Method according to claim 9,
- wherein the change in position is detected with a position detection device, in particular by changing the state of an electrical contact, a magnetic contact, an inductance, a capacitance, by detecting a magnetic field, by detecting an identification feature from the element formed as a data carrier at the accessory and/or by detecting a change in a rotational speed, a temperature level, and
- wherein the net weight is calculated as a function of a detected assembly or removal by adding the weight information to the gross weight or subtracting the weight information from the gross weight.

12. Method according to any one of claims 9 to 11,
wherein the state of a detection device (22, 218) configured to detect an identification feature is interrogated as a function of the result of a comparison of the detected gross weight or the difference in amount with at least one reference value from the database (30, 226).

13. Method according to claim 12,
- wherein the state of a detection device (22, 218) configured to detect an identification feature is interrogated in the event where the comparison results in that:
- the detected gross weight or amount difference matches a reference value from the database (30, 226),
or
- the detected gross weight or difference in amount exceeds a reference value from the database (30, 226).

14. Method according to any one of claims 9 to 13,
- wherein the detected identification feature is compared with at least one identification feature from a database (30, 226), and
- wherein the retrieved weight information is weight information associated with an identification feature from the database (30, 226) that matches the detected identification feature.

15. Computer program comprising instructions, the execution of which on at least one processor of a control device of a kitchen appliance system according to any one of claims 1 to 8 causes a method according to any one of claims 9 to 14 to be carried out.

## Revendications

1. Système de robot de cuisine (2, 202)
- avec un appareil de base (4, 204) ayant un boîtier (14, 214) et
- avec au moins un accessoire (6, 8, 206, 208) ayant une caractéristique d'identification,
- où un module de pesée (16, 220) est prévu sur l'appareil de base (4, 204) pour déterminer un poids brut, et
- où un dispositif de commande (18, 216) est prévu sur l'appareil de base (4, 204),
**caractérisé en ce**
- **qu'**un dispositif de détection (22, 218) est prévu sur l'appareil de base (4, 204) pour détecter une caractéristique d'identification d'au moins un accessoire (6, 8, 206, 208), et
- **que** le dispositif de commande (18, 216) est configuré pour
- détecter un changement de position de l'au moins un accessoire (6, 8, 206, 208) par rapport à l'appareil de base (4, 204),
- récupérer une information de poids correspondant à une caractéristique d'identification détectée par le dispositif de détection (22, 218) et
- calculer un poids net sur la base d'un poids brut détecté par le module de pesage (16, 220) et en tenant compte de l'information de poids.

2. Système de robot de cuisine (2, 202) selon la revendication 1,
**caractérisé en ce que**
- que le dispositif de commande (18, 216) est configuré pour détecter une insertion ou un retrait d'au moins un accessoire (6, 8, 206, 208) par rapport à l'appareil de base (4, 204) et/ou par rapport à un autre accessoire (6, 8, 206, 208) par
- établir une différence entre un premier poids brut enregistré à un premier moment et un deuxième poids brut enregistré à un deuxième moment ultérieur,
- comparer la valeur de la différence établie avec au moins une valeur de référence d'une base de données (30, 226) et
- classer le signe de la différence ainsi obtenue comme « positif » ou « négatif »
et
- que le dispositif de commande (18, 216) est configuré pour calculer le poids net en fonction d'une insertion ou d'un retrait détecté, en additionnant l'information de poids au deuxième poids brut ou en soustrayant l'information de poids du deuxième poids brut.

3. Système de robot de cuisine (2, 202) selon la revendication 1,
**caractérisé en ce**
- **que** un dispositif de détection de position est prévu sur l'appareil de base (4, 204) et est configuré pour détecter une insertion ou un retrait d'au moins un accessoire (6, 8, 206, 208) par rapport à l'appareil de base (4, 204) et/ou par rapport à un autre accessoire (6, 8, 206, 208) et de transmettre cette information au dispositif de commande (18, 216), et
- **que** le dispositif de commande (18, 216) est configuré pour calculer le poids net en fonction d'une insertion ou d'un retrait détecté, en additionnant l'information de poids au poids brut détecté ou en soustrayant l'information de poids du poids brut détecté.

4. Système de robot de cuisine (2, 202) selon l'une des revendications 1 à 3,
**caractérisé en ce**
**que** le dispositif de commande (18, 216) est configuré pour, lors de la détection de plusieurs caractéristiques d'identification, récupérer les informations de poids correspondantes et prendre en compte jointement ces informations de poids pour calculer le poids net.

5. Système de robot de cuisine (2, 202) selon l'une des revendications 1 à 4,
**caractérisé en ce**
**que** les informations de poids correspondant à une caractéristique d'identification détectée sont enregistrées
- avec la caractéristique d'identification sur l'accessoire (6, 8, 206, 208),
- dans un moyen de stockage (226) du dispositif de commande (18, 216)
ou
- dans une base de données externe (30) accessible par le dispositif de commande (18, 216)

6. Système de robot de cuisine (2, 202) selon l'une des revendications 1 à 5,
**caractérisé en ce que**
la valeur d'une information de poids correspondant à une caractéristique d'identification est enregistrée
- par le fabricant de l'accessoire
ou
- dans le cadre d'une opération d'étalonnage par pesée de l'accessoire correspondant (6, 8, 206, 208) à l'état vide à l'aide du module de pesée (16, 220).

7. Système de robot de cuisine (2, 202) selon l'une des revendications 1 à 6,
**caractérisé en ce**
- **que** le dispositif de commande (18, 216) est configuré pour comparer le poids net avec une indication de poids provenant d'une notice de préparation et pour émettre une indication correspondante à l'utilisateur d'une augmentation ou une réduction d'une quantité d'ingrédient, où l'indication de poids comprend un poids de consigne pour une quantité d'ingrédient,
et/ou
- **que** le dispositif de commande (18, 216) est configuré pour comparer un poids brut enregistré avec une indication de poids provenant d'une notice de préparation et pour émettre un message correspondant à l'utilisateur d'une addition ou une réduction d'une quantité d'ingrédient, où l'indication de poids comprend au moins une information de poids pour un accessoire recommandé (6, 8, 206, 208) et un poids de consigne pour une quantité d'ingrédients.

8. Système de robot de cuisine (2, 202) selon l'une des revendications 1 à 7,
**caractérisé en ce**
**que** le dispositif de commande (18, 216) est configuré pour fournir le poids net via une interface de communication (20, 224) comme une informations lisible par machine ou comme une informations destinée à un utilisateur.

9. Procédé de tarage automatique pour un système de robot de cuisine (2, 202) avec un appareil de base (4, 204) et un accessoire (6, 8, 206, 208), en particulier pour un système de robot de cuisine (2, 202) selon l'une des revendications 1 à 8,
- où un changement de position de l'accessoire (6, 8, 206, 208) par rapport à l'appareil de base (4, 204) est détecté,
- où un poids brut et une caractéristique d'identification d'un accessoire (6, 8, 206, 208) sont enregistrés,
- où une information de poids correspondant à la caractéristique d'identification détectée est récupéré, et
- où un poids net est calculé sur la base du poids brut et en tenant compte de l'information de poids.

10. Procédé selon la revendication 9,
- où le changement de position est détecté par ce
- qu'un premier poids brut est détecté à un premier moment et un deuxième poids brut à un deuxième moment ultérieur,
- que la différence de valeur entre le premier poids brut et le deuxième poids brut est comparée à au moins une valeur de référence d'une base de données (30, 226), et
- que la comparaison révèle que la différence de valeur dépasse au moins une valeur de référence ou correspond à celle-ci, et
- où le poids net est calculé sur la base du deuxième poids brut et en tenant compte de la information de poids.

11. Procédé selon la revendication 9,
- où le changement de position est détecté à l'aide d'un dispositif de détection de position, en particulier par changement d'état d'un contact électrique, d'un contact magnétique, d'une inductance, d'une capacité, par détection d'un champ magnétique, par enregistrement d'une caractéristique d'identification à partir de l'élément sur l'accessoire configuré comme support de données et/ou par enregistrement d'un changement de vitesse de rotation, d'une température, et
- où le poids net est calculé en fonction d'une insertion ou d'un retrait détecté en additionnant l'information de poids au poids brut ou en soustrayant l'information de poids du poids brut.

12. Procédé selon l'une des revendications 9 à 11,
où l'état d'un dispositif de détection (22, 218) configuré pour détecter une caractéristique d'identification est interrogé en fonction du résultat d'une comparaison du poids brut détecté ou de la différence de valeur avec au moins une valeur de référence de la base de données (30, 226).

13. Procédé selon la revendication 12,
où l'état d'un dispositif de détection (22, 218) configuré pour détecter une caractéristique d'identification est interrogé lorsque la comparaison révèle
- que le poids brut détecté ou la différence de valeur correspond à une valeur de référence de la base de données (30, 226),
ou
- que le poids brut détecté ou la différence de valeur dépasse une valeur de référence de la base de données (30, 226).

14. Procédé selon l'une des revendications 9 à 13,
- où la caractéristique d'identification détectée est comparée à au moins une caractéristique d'identification d'une base de données (30, 226), et
- où les informations de poids récupérées sont des informations de poids associées à une caractéristique d'identification provenant de la base de données (30, 226) qui correspond à la caractéristique d'identification détectée.

15. Programme informatique avec des instructions dont l'exécution sur au moins un processeur d'un dispositif de commande d'un système de robot de cuisine selon l'une des revendications 1 à 8 provoque la mise en œuvre d'un procédé selon l'une des revendications 9 à 14.
